(19) Europäisches Patentamt / European Patent Office / Office européen des brevets

(11) **EP 2 779 525 A1**

(12) **EUROPEAN PATENT APPLICATION**

(43) Date of publication:
**17.09.2014 Bulletin 2014/38**

(51) Int Cl.:
*H04L 9/30* (2006.01)

(21) Application number: **13305298.5**

(22) Date of filing: **15.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Joye, Marc**
**35576 Cesson Sévigné (FR)**
• **Libert, Benoît**
**35576 Cesson Sévigné (FR)**

(74) Representative: **Huchet, Anne et al**
**Technicolor**
**1, rue Jeanne d'Arc**
**92443 Issy-les-Moulineaux Cedex (FR)**

(54) **Cryptographic devices and methods for encoding-free encryption on elliptic curves**

(57) Encoding-free encryption on elliptic curves is obtained by a device (100) having a processor (120) choosing (S1) an integer $r \in \mathbb{Z}/q\mathbb{Z}$; computing (S2) in $E(\mathbb{F}_p)$ the a first point $C_1 = [r]P$ and a second point $C_2 = [r]Y$, wherein $E$ is an elliptic curve defined over $\mathbb{F}_p$, $P \in E(\mathbb{F}_p)$ is a point of prime order $q$, $Y = [s]P \in E(\mathbb{F}_p)$ is an encryption key for an integer $s \in \mathbb{Z}/q\mathbb{Z}$; computing (S3) the class $\beta$ of $\Psi(C_2)$; computing (S4) a first value $c_2$ by performing an elementary arithmetic operation modulo $p$ between the message $m \in \mathbb{Z}/p\mathbb{Z}$ and the class $\beta$; combining the first point $C_1$ and the first value $c_2$ to obtain the ciphertext $(C_1, c_2)$; and outputting (S5) the ciphertext $(C_1, c_2)$. Decryption of a ciphertext $(C_1, c_2)$ comprising a first point $C_1$ and a first value $c_2$ to obtain a message $m \in \mathbb{Z}/p\mathbb{Z}$, is performed by multiplying a decryption key s and the first point $C_1$ to obtain a second point $P = (x, y) \in E(\mathbb{F}_p)$; calculating $\Psi(P) \in E(\mathbb{Z}/p^2\mathbb{Z})$ to obtain a third point; performing (S6) an elementary arithmetic operation modulo $p$ between the first value $c_2$ and the class of the third point to obtain the message m; and outputting the message $m$.

Figure 1

**Description**

TECHNICAL FIELD

The present invention relates generally to cryptography, and in particular to point-encoding-free encryption.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The classical ElGamal encryption scheme is described in Taher ElGamal. A public key cryptosystem and a signature scheme based on discrete logarithms. IEEE Transactions on Information Theory, 31(4):469-472, 1985. It works in any finite group $\mathbb{G}$, in which computation of discrete logarithms is assumed to be intractable. In order to avoid subgroup attacks using the Pohlig-Hellman algorithm [see Stephen C. Pohlig and Martin E. Hellman. An improved algorithm for computing logarithms over GF(p) and its cryptographic significance. IEEE Transactions on Information Theory, 24(1):106-110, 1978.], the underlying group is usually restricted to a prime-order group $\mathbb{G} = \langle g \rangle$. In the following, $q$ denotes the order of $\mathbb{G}$.

The public ('encryption') key is given by $y = g^s \in \mathbb{G}$ for some randomly chosen $s \in \mathbb{Z}/q\mathbb{Z}$ while the private ('decryption') key is $s$. The message space is $\mathbb{G}$. The encryption of a message $m \in \mathbb{G}$ is given by the pair $(c_1, c_2)$ where

$$c_1 = g^r \text{ and } c_2 = m\, y^r$$

for a random integer $r \in \mathbb{Z}/q\mathbb{Z}$. Given the ciphertext $(c_1, c_2)$, message $m$ is then recovered using secret key $s$ as

$$m = c_2/c_1{}^s$$

ElGamal encryption may be applied to elliptic curves over a finite field. Let $\mathbb{K}$ be a finite field of characteristic $p \neq 2,3$. The ring of dual numbers $\mathbb{K}$ is $\mathbb{K}[\varepsilon]$ with $\varepsilon^2 = 0$. Consider the elliptic curve $E$ over $\mathbb{K}[\varepsilon]$ given by the Weierstraß equation

$$E: y^2 = x^3 + ax + b$$

with $a, b \in \mathbb{K}[\varepsilon]$ and $4a^3 + 27b^2 \neq 0$. The set of points $(x, y) \in \mathbb{K}[\varepsilon] \times \mathbb{K}[\varepsilon]$ satisfying this equation together with the points at infinity, $O_k = (k\varepsilon : 1 : 0)$ with $k \in \mathbb{K}[\varepsilon]$, form an Abelian group under the chord-and-tangent rule with $O$ (: $= O_0$) as neutral element. Explicit addition formulae for the chord-and-tangent rule are provided in Steven Galbraith. Elliptic curve Paillier schemes. Journal of Cryptology, volume 15, number 2, pages 129-138, 2002. This group is denoted by $E(\mathbb{K}[\varepsilon])$ and its order by $\# E(\mathbb{K}[\varepsilon])$. Further, letting $a = a_0 + a_1\varepsilon$ and $b = b_0 + b_1\varepsilon$, the finite points $(x_0 + x_1\varepsilon, y_0 + y_1\varepsilon)$ of $E(\mathbb{K}[\varepsilon])$ satisfy the following system of equations over $\mathbb{K}$ (cf. Definition 3.3 of Marie Virat. A

cryptosystem "à la" ElGamal on an elliptic curve over $\mathbb{F}_p[\varepsilon]$. In C. Wolf, S. Lucks, and P.-W. Yau, editors, Western European Workshop on Research in Cryptology (WEWoRC 2005), volume 74 of Lecture Notes in Informatics, pages 32-44. Gesellschaft für Informatik e.V., 2005.):

$$\begin{cases} y_0{}^2 = x_0{}^3 + a_0 x_0 + b_0 \\ (2y_0)y_1 = (3x_0{}^2 + a_0)x_1 + a_1 x_0 + b_1 \end{cases}$$

However, when applying ElGamal encryption to such an elliptic curve, it is required to express the plaintext message $m$ as a point on the elliptic curve [see section 6.4 of Lawrence C. Washington. Elliptic Curves, Number Theory and Cryptography. Discrete Mathematics and its Applications. Chapman & Hall/CRC, 2nd edition, 2008.]. To get around this requirement, Virat proposed in the mentioned paper a new elliptic curve cryptosystem. The idea consists in working with an elliptic curve over the ring $\mathbb{F}_p[\varepsilon]$, i.e. the ring of dual numbers over the prime field $\mathbb{F}_p$ with $p > 3$. Virat's cryptosystem can be described as follows.

Let $E$ be an elliptic curve over $\mathbb{F}_p[\varepsilon]$ as per the Weierstraß equation and let $\widehat{\mathbb{G}} = \langle \widehat{P} \rangle \subseteq E\left(\mathbb{F}_p[\varepsilon]\right)$ be a subgroup of order $pq$ for some prime $q \neq p$. The public encryption key is $Y = [sp]\hat{P}$ for some random integer $s \in \mathbb{Z}/q\mathbb{Z}$ and the private decryption key is $s$. The message space is $\mathbb{F}_p$ and the encryption of a message $m \in \mathbb{F}_p$ is given by:

1. Choose a random integer $r \in \mathbb{Z}/q\mathbb{Z}$;

2. Choose a random finite point $(x_0, y_0) \in E\left(\mathbb{F}_p\right)$;

3. Define $\hat{M} = (x_0 + m\varepsilon, y_0 + y_1\varepsilon)$ where $y_1$ is the unique solution in $\mathbb{F}_p$ such that $\hat{M} \in E\left(\mathbb{F}_p[\varepsilon]\right)$;
4. Compute the points $C_1 = [rp]\hat{P}$ and $\hat{C}_2 = [r]Y + \hat{M}$; and
5. Output the ciphertext $(C_1, \hat{C}_2)$.

The decryption of $(C_1, \hat{C}_2)$ is obtained as $\hat{M} = \hat{C}_2 - [s]C_1$ using secret key s which in turn yields the value of $m$.

The description appears to indicate that the cryptosystem has a ciphertext expansion ratio of 8 ÷ 1, which is not completely true. As shown in the next proposition, when the curve parameters $a, b \in \mathbb{K}$ are in $\mathbb{F}_p$, it turns out that $C_1$ is an element of $E\left(\mathbb{F}_p\right)$; moreover, the second part of the ciphertext, $\hat{C}_2$ can be represented as a pair $(C_2, k)$. This leads to a ciphertext expansion ratio of 5 ÷ 1.

**Proposition 1.** Using the previous notations, let $E\left(\mathbb{K}[\varepsilon]\right)$ be an elliptic curve as per the Weierstraß equation with curve parameters $a, b \in \mathbb{K}$. Then for every finite point $\widehat{P} = (x_0 + x_1\varepsilon, y_0 + y_1\varepsilon) \in E\left(\mathbb{K}[\varepsilon]\right)$ there exists a unique $k \in \mathbb{K}$ such that

$$\widehat{P} = P + O_k$$

with

$$P = (x_0, y_0) \in E(\mathbb{K}) \quad \text{and} \quad k = \begin{cases} -\dfrac{x_1}{2y_0} & \text{if } y_0 \neq 0 \\ -\dfrac{y_1}{3x_0^2 + a} & \text{if } y_0 = 0 \end{cases}$$

Note that in Proposition 1, if $y_0 = 0$ then it is not possible that $3y_0^2 + a = 0$ as otherwise the point $(x_0,y_0)$ would be singular, contradicting that $E(\mathbb{K})$ is an elliptic curve.

It will be appreciated that Virat's cryptosystem has a number of disadvantages. First it requires the generation of a random point $(x_0,y_0) \in E(\mathbb{F}_p)$, which either requires computation of Legendre symbols or a point multiplication in $E(\mathbb{F}_p)$. Second its ciphertext expansion ratio is at least $5 \div 1$ (while ElGamal's ciphertext expansion ratio over $E(\mathbb{F}_p)$ is $4 \div 1$), which is particularly damaging for elliptic curve cryptosystems as they are primarily designed to reduce the bandwidth. Finally, the security of the scheme is rather weak: it is only shown to be one-way and in particular it lacks indistinguishable encryptions.

It will thus be appreciated that it is desired to have a cryptosystem that overcomes at least some of the disadvantages of Virat's cryptosystem. The present invention provides such a cryptosystem.

## SUMMARY OF INVENTION

In a first aspect, the invention is directed to a device for encryption of a message $m \in \mathbb{Z}/p\mathbb{Z}$ to obtain a ciphertext. The device comprises a processor configured to choose an integer $r \in \mathbb{Z}/q\mathbb{Z}$; compute in $E(\mathbb{F}_p)$ a first point $C_1 = [r_1]P$ and a second point $C_2 = [r_2]Y$, wherein $r_1$ and $r_2$ are integers derived in a predetermined manner from the integer $r$, $E$ is an elliptic curve defined over $\mathbb{F}_p$, $P \in E(\mathbb{F}_p)$ is a point of finite order $q$, $Y = [s]P \in E(\mathbb{F}_p)$ is an encryption key for an integer $s \in \mathbb{Z}/q\mathbb{Z}$; compute the class β of Ψ($C_2$), where Ψ is a mapping function; compute a first value $c_2$ by performing an elementary arithmetic operation modulo $p$ between the message $m$ and the class β; combine the first point $C_1$ and the first value $c_2$ to obtain the ciphertext ($C_1$, $c_2$); and output the ciphertext ($C_1$, $c_2$).

In a first embodiment, the mapping function Ψ maps points of $E(\mathbb{F}_p)$ onto points of $E(\mathbb{Z}/p^2\mathbb{Z})$. It is advantageous that Ψ($C_2$) is obtained by: calculating $\Delta(C_2) = \dfrac{(x^3 + ax + b - y^2) \bmod p}{p}$, wherein $(x,y)$ are coordinates of $C_2$; calculating $\psi(C_2) = \dfrac{\Delta(C_2)}{2y} \bmod p$; and mapping $(x,y) \mapsto (x, y + \psi(C_2)p)$.

In a second embodiment, $q$ is prime.

In a third embodiment, $r_1 = r_2$.

In a second aspect, the invention is directed to a device for decryption of a ciphertext ($C_1$, $c_2$) comprising a first point $C_1$ and a first value $c_2$ to obtain a message $m \in \mathbb{Z}/p\mathbb{Z}$. The device comprises a processor configured to multiply a decryption key $s$ and the first point $C_1$ to obtain a second point $P = (x, y) \in E(\mathbb{F}_p)$; map $P$ onto a third point in $E(\mathbb{Z}/p^2\mathbb{Z})$ using a mapping function Ψ; perform an elementary arithmetic operation modulo $p$ between the first value $c_2$ and the class of the third point to obtain the message $m$; and output the message $m$.

In a first embodiment, the mapping function $\Psi$ maps points of $E\left(\mathbb{F}_p\right)$ onto points of $E\left(\mathbb{Z}/p^2\mathbb{Z}\right)$ by:

calculating $\Delta(\boldsymbol{P}) = \frac{\left(x^3+ax+b-y^2\right)\bmod p}{p}$, wherein (x,y) are coordinates of a point $\boldsymbol{P}$; calculating $\psi(\boldsymbol{P}) = \frac{\Delta(\boldsymbol{P})}{2y}$

mod p; and mapping $(x,y) \mapsto (x, y + \psi(\boldsymbol{P})p)$.

In a second embodiment, q is prime.

In a third aspect, the invention is directed to a method of encryption of a message $m \in \mathbb{Z}/p\mathbb{Z}$ to obtain a ciphertext. A processor in a device chooses an integer $r \in \mathbb{Z}/q\mathbb{Z}$; computes in $E\left(\mathbb{F}_p\right)$ a first point $\boldsymbol{C_1}$ = $[r_1]\boldsymbol{P}$ and

a second point $\boldsymbol{C_2}$ = $[r_2]\boldsymbol{Y}$, wherein $r_1$ and $r_2$ are integers derived in a predetermined manner from the integer r, E is an elliptic curve defined over $\mathbb{F}_p$, $\boldsymbol{P} \in E\left(\mathbb{F}_p\right)$ is a point of finite order q, $\boldsymbol{Y} = [s]\boldsymbol{P} \in E\left(\mathbb{F}_p\right)$ is an encryption key for an integer $s \in \mathbb{Z}/q\mathbb{Z}$;

computes the class β of $\Psi(\boldsymbol{C_2})$, where $\Psi$ is a mapping function; computes a first value $c_2$ by performing an elementary arithmetic operation modulo p between the message m and the class β; combines the first point $\boldsymbol{C_1}$ and the first value $c_2$ to obtain the ciphertext ($\boldsymbol{C_1}$, $c_2$); and outputs the ciphertext ($\boldsymbol{C_1}$, $c_2$).

In a first embodiment, the mapping function $\psi$ maps points of

$$E\left(\mathbb{F}_p\right)$$

onto points of

$$E\left(\mathbb{Z}/p^2\mathbb{Z}\right).$$

.It is advantageous that $\psi(\boldsymbol{C_2})$ is obtained by: calculating $\Delta(\boldsymbol{C_2}) = \frac{\left(x^3+ax+b-y^2\right)\bmod p}{p}$, wherein (x,y) are coor-

dinates of $\boldsymbol{C_2}$; calculating $\psi(\boldsymbol{C_2}) = \frac{\Delta(\boldsymbol{C_2})}{2y}\bmod p$; and mapping $(x,y) \mapsto (x, y + \psi(\boldsymbol{C_2})p)$.

In a second embodiment, q is prime.

In a third embodiment, $r_1 = r_2$.

In a fourth aspect, the invention is directed to a method of decryption of a ciphertext ($\boldsymbol{C_1}$, $c_2$) comprising a first

point $\boldsymbol{C_1}$ and a first value $c_2$ to obtain a message $m \in \mathbb{Z}/p\mathbb{Z}$. A processor of a device multiplies a decryption key s

and the first point $\boldsymbol{C_1}$ to obtain a second point $\boldsymbol{P} = (x, y) \in E\left(\mathbb{F}_p\right)$; maps $\boldsymbol{P}$ onto a third point in $E\left(\mathbb{Z}/p^2\mathbb{Z}\right)$ using

a mapping function $\Psi$; performs an elementary arithmetic operation modulo p between the first value $c_2$ and the class of the third point to obtain the message m; and outputs the message m.

In a first embodiment, the mapping function $\Psi$ maps points $E\left(\mathbb{F}_p\right)$ onto points of $E\left(\mathbb{Z}/p^2\mathbb{Z}\right)$ by: calculating

$\Delta(\boldsymbol{P}) = \frac{\left(x^3+ax+b-y^2\right)\bmod p}{p}$, wherein (x,y) are coordinates of a point $\boldsymbol{P}$; calculating $\psi(\boldsymbol{P}) = \frac{\Delta(\boldsymbol{P})}{2y}\bmod p$;

and mapping $(x,y) \mapsto (x, y + \psi(\boldsymbol{P})p)$.

BRIEF DESCRIPTION OF DRAWINGS

Preferred features of the present invention will now be described, by way of non-limiting example, with reference to the accompanying drawings, in which:

Figure 1 illustrates a method for encoding-free encryption on elliptic curves and subsequent decryption; and
Figure 2 illustrates a system for encoding-free encryption on elliptic curves according to a preferred embodiment of the invention.

DESCRIPTION OF EMBODIMENTS

A main idea of the present invention is to consider elliptic curves defined over the ring $\mathbb{Z}/p^2\mathbb{Z}$ rather than elliptic curves defined over the ring $\mathbb{F}_p[\varepsilon]$. This allows the definition of a class function whereupon ElGamal-type cryptosystems are derived using the terminology of Benoit Chevallier-Mames, Pascal Paillier, and David Pointcheval. Encoding-free ElGamal encryption without random oracles. In M. Yung et al., editors, Public Key Cryptography - PKC 2006, volume 3958 of Lecture Notes in Computer Science, pages 91-104. Springer, 2006.

Since $\mathbb{F}_p = \mathbb{Z}/p\mathbb{Z} \subset \mathbb{Z}/p^2\mathbb{Z}$ , it is possible to view an elliptic curve given by a Weierstraß equation (with curve parameters $a, b \in \mathbb{F}_p$) over the ring $\mathbb{Z}/p^2\mathbb{Z}$. In order to deal with the points at infinity, the projected form $Y^2Z = X^3 + aXZ^2 + bZ^3$ is regarded. The set of points on this elliptic curve over $\mathbb{Z}/p^2\mathbb{Z}$ is denoted by $E(\mathbb{Z}/p^2\mathbb{Z})$. The subset of points that reduce modulo $p$ to $\boldsymbol{O}$ = (0: 1: 0) is denoted by $E_1(\mathbb{Z}/p^2\mathbb{Z})$.

**Proposition 2**. Using these notations, $E_1(\mathbb{Z}/p^2\mathbb{Z}) = \{(\alpha p : 1 : 0) \mid 0 \leq \alpha \leq p - 1\}$.

The theory of formal groups (see e.g. Proposition IV.3.2 in Joseph H. Silverman. The Theory of Elliptic Curves. Volume 106 of Graduate Texts in Mathematics, Springer-Verlag, 1986.) teaches that $E_1(\mathbb{Z}/p^2\mathbb{Z})$ is a group isomorphic to the additive group $(\mathbb{Z}/p\mathbb{Z})^+$:

$$\Gamma: E_1(\mathbb{Z}/p^2\mathbb{Z}) \overset{\sim}{\to} (\mathbb{Z}/p\mathbb{Z})^+, (\alpha p : 1 : 0) \mapsto \alpha .$$

Hence, the sum of two elements $(\alpha_1 p : 1 : 0)$ and $(\alpha_{2p} : 1 : 0)$ in $E_1(\mathbb{Z}/$ is given by $(\alpha_3 p : 1 : 0)$ with $\alpha_3 = (\alpha_1 + a_2) \bmod p$. This also implies that $E_1(\mathbb{Z}/p^2\mathbb{Z})$ is a cyclic group of order $p$. Letting $\boldsymbol{U}$ = $(p : 1 : 0)$, $E_1(\mathbb{Z}/p^2\mathbb{Z}) = \langle \boldsymbol{U} \rangle$.

Given a finite point $\boldsymbol{P} = (x, y) \in E(\mathbb{F}_p)$, the following definitions are made:

$$\Delta(\boldsymbol{P}) = \frac{(x^3 + ax + b - y^2) \bmod p}{p} \text{ and } \psi(\boldsymbol{P}) = \frac{\Delta(\boldsymbol{P})}{2y} \bmod p.$$

This gives rise to the map:

$$\Psi : E(\mathbb{F}_p) \to E(\mathbb{Z}/p^2\mathbb{Z}), \begin{cases} \boldsymbol{O} \mapsto \boldsymbol{O} \\ (x, y) \mapsto (x, y + \psi(\boldsymbol{P})p) \end{cases} .$$

It is assumed that $E$ is not an anomalous curve (i.e. $\#E(\mathbb{F}_p) \neq p$). The order of point $\boldsymbol{P} \in E(\mathbb{F}_p)$ is

denoted $q = \mathrm{ord}_E(\boldsymbol{P})$. $\boldsymbol{V}$ is defined as $\boldsymbol{V} = [p]\Psi(\boldsymbol{P})$ and is clearly of order $q$.

Subgroup $\mathbb{G} = \langle \boldsymbol{P} \rangle \subseteq E\left(\mathbb{F}_p\right)$ is of order $q$ and subgroup $\widehat{\mathbb{G}} = \langle \boldsymbol{U}, \boldsymbol{V} \rangle \subseteq E(\mathbb{Z}/p^2\mathbb{Z})$ is of order $pq$. Any element $\boldsymbol{Q} \in \widehat{\mathbb{G}}$ can be uniquely written as:

$$\boldsymbol{Q} = [\beta]\boldsymbol{U} + [\alpha]\boldsymbol{V} \text{ for some } \alpha \in \mathbb{Z}/q\mathbb{Z} \text{ and } \beta \in \mathbb{Z}/p\mathbb{Z}.$$

Integer $\beta$ is called the *class* of $\boldsymbol{Q}$ and written $\beta = [[\boldsymbol{Q}]]$. The crucial observation is that $\Psi(\mathbb{G}) \subseteq \widehat{\mathbb{G}}$. As a consequence, the class of any element $\boldsymbol{Q} \in \mathbb{G}$ is defined as $[[\Psi(\boldsymbol{Q})]]$.

For the cryptosystem having a defined security parameter of the present invention, let $E$ be an elliptic curve defined over $\mathbb{F}_p$ and let $\boldsymbol{P} \in E\left(\mathbb{F}_p\right)$ be a point of large, i.e. exponential in the security parameter, finite order $q$. The public encryption key is $\boldsymbol{Y} = [s]\boldsymbol{P} \in E\left(\mathbb{F}_p\right)$ for some random integer $s \in \mathbb{Z}/q\mathbb{Z}$ and the private decryption key is $s$. The message space is $\mathbb{Z}/p\mathbb{Z}$.

In a first preferred embodiment, the encryption of a message $m \in \mathbb{Z}/p\mathbb{Z}$ is given by the following method:

    1. Choose, S1, a random integer $r \in \mathbb{Z}/q\mathbb{Z}$;

    2. Compute S2 in $E\left(\mathbb{F}_p\right)$ the points $\boldsymbol{C_1} = [r]\boldsymbol{P}$ and $\boldsymbol{C_2} = [r]\boldsymbol{Y}$;
    3. Compute S3 $\beta = [[\Psi(\boldsymbol{C_2})]]$
    4. Define S4 $c_2 = m + \beta \pmod{p}$;
    5. Output S5 the ciphertext $(\boldsymbol{C_1}, c_2)$.

The decryption of $(\boldsymbol{C_1}, c_2)$ is obtained S6 as $m = c_2 - [[\Psi([s]\boldsymbol{C_1})]] \pmod{p}$ using the secret key $s$.

The cryptosystem of the first preferred embodiment is additive. As $\mathbb{Z}/p\mathbb{Z}$ is equipped with both addition and multiplication, it is possible to define a multiplicative cryptosystem by replacing Step 4 (i.e. S4) accordingly. Thus, in a second preferred embodiment, the encryption of a message $m \in \mathbb{Z}/p\mathbb{Z}$ is given by the following method:

    1. Choose a random integer $r \in \mathbb{Z}/q\mathbb{Z}$;

    2. Compute in $E\left(\mathbb{F}_p\right)$ the points $\boldsymbol{C_1} = [r]\boldsymbol{P}$ and $\boldsymbol{C_2} = [r]\boldsymbol{Y}$;
    3. Compute $\beta = [[\Psi(\boldsymbol{C_2})]]$
    4. Define $c_2 = m \cdot \beta \pmod{p}$;
    5. Output the ciphertext $(\boldsymbol{C_1}, c_2)$.

The decryption of $(\boldsymbol{C_1}, c_2)$ is obtained as $m = c_2/[[\Psi([s]\boldsymbol{C_1})]] \pmod{p}$ using the secret key $s$.

It will be appreciated that various modifications are possible, such as using multiples of one or more variables that are compensated for further in the method. It is for example also possible to compute, in step 2, the two points $\boldsymbol{C_1} = [r_1]\boldsymbol{P}$ and $\boldsymbol{C_2} = [r_2]\boldsymbol{Y}$, where $r_1$ and $r_2$ are derived in a predetermined manner from $r$ (e.g. using additions or the aforementioned multiples and possibly rounding to integers, if necessary performed modulus a given value) so that there is a relation between them.

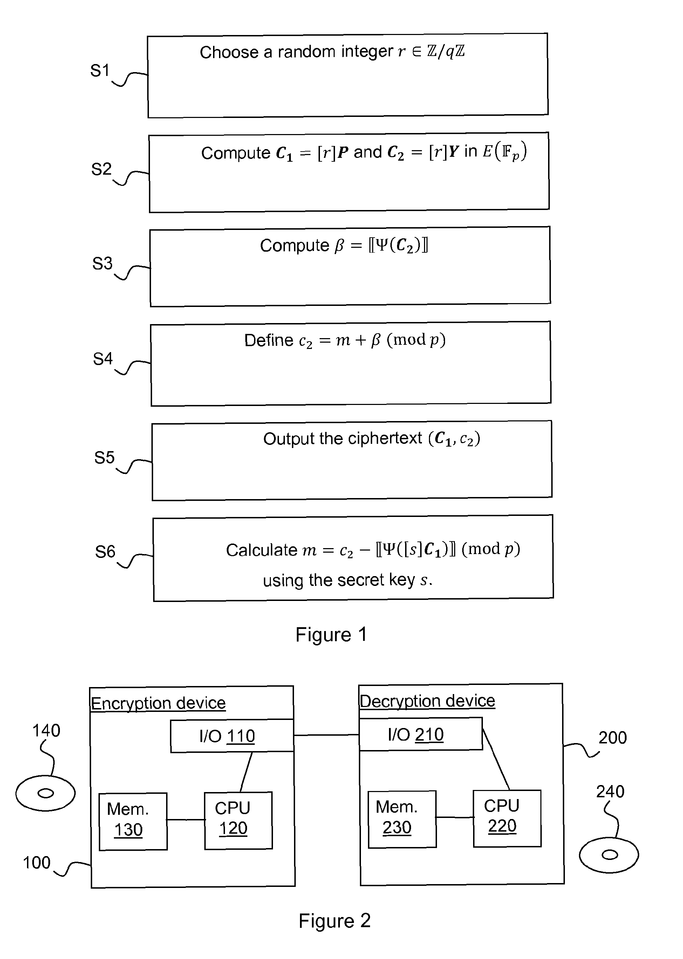

Figure 2 illustrates an encryption device 100 and a decryption device 200 according to an embodiment of the invention. The devices 100, 200 each comprise at least one interface unit 110, 210 configured for communication, at least one processor ("processor") 120, 220 and at least one memory 130, 230 configured for storing data, such as accumulators and intermediary calculation results. Figure 2 also shows a first and a second computer program product (non-transitory storage medium) 140, 240 such as a CD-ROM or a DVD comprises stored instructions that, when executed by the processor 120, 220, respectively encrypt a message and decrypt a ciphertext according to the present invention.

It will thus be appreciated that the cryptoschemes of the present invention can enjoy the advantages of Virat's cryptosystem (i.e., no message encoding as points on elliptic curves) but without its disadvantages. Further, it can even improve the ciphertext expansion ratio compared to ElGamal's cryptosystem to only 3 ÷ 1 which can be further reduced to 2 ÷ 1 using a compressed representation for $C_1$. Second, they meet the standard IND-CPA (Indistinguishability under chosen-plaintext attack) security level in the standard model while Virat's cryptosystem only meets the OW-CPA (One-wayness under chosen-plaintext attack) security level. Third, the proposed cryptosystems are to some extent malleable. Fourth, encryption is very fast. In an on-line/off-line mode, the encryption of a message $m$ only requires an addition modulo $p$.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A device (100) for encryption of a message $m \in \mathbb{Z}/p\mathbb{Z}$ to obtain a ciphertext, the device comprising a processor (120) configured to:

   - choose an integer $r \in \mathbb{Z}/q\mathbb{Z}$;

   - compute in $E\left(\mathbb{F}_p\right)$ a first point $C_1 = [r_1]P$ and a second point $C_2 = [r_2]Y$, wherein $r_1$ and $r_2$ are integers derived in a predetermined manner from the integer $r$, $E$ is an elliptic curve defined over $\mathbb{F}_p$, $P \in E\left(\mathbb{F}_p\right)$ is a point of finite order $q$, $Y = [s]P \in E\left(\mathbb{F}_p\right)$ is an encryption key for an integer $s \in \mathbb{Z}/q\mathbb{Z}$;

   - compute the class β of Ψ($C_2$), where Ψ is a mapping function;
   - compute a first value $c_2$ by performing an elementary arithmetic operation modulo $p$ between the message $m$ and the class β;
   - combine the first point $C_1$ and the first value $c_2$ to obtain the ciphertext ($C_1$, $c_2$); and
   - output the ciphertext ($C_1$, $c_2$).

2. The device of claim 1, wherein the mapping function Ψ maps points of $E\left(\mathbb{F}_p\right)$ onto points of $E\left(\mathbb{Z}/p^2\mathbb{Z}\right)$.

3. The device of claim 2, wherein Ψ($C_2$) is obtained by:

   - calculating $\Delta(C_2) = \dfrac{\left(x^3 + ax + b - y^2\right) \bmod p}{p}$, wherein ($x,y$) are coordinates of $C_2$;

   - calculating $\psi(C_2) = \dfrac{\Delta(C_2)}{2y} \bmod p$; and

   - mapping ($x,y$) ↦ ($x, y + \psi(C_2)p$).

4. The device of claim 1, wherein $q$ is prime.

5. The device of claim 1, wherein $r_1 = r_2$.

6. A device (200) for decryption of a ciphertext ($C_1$, $c_2$) comprising a first point $C_1$ and a first value $c_2$ to obtain a message $m \in \mathbb{Z}/p\mathbb{Z}$, the device comprising a processor (220) configured to:

   - multiply a decryption key s and the first point $C_1$ to obtain a second point $P = (x, y) \in E\left(\mathbb{F}_p\right)$;

   - map $P$ onto a third point in $E\left(\mathbb{Z}/p^2\mathbb{Z}\right)$ using a mapping function Ψ;

   - perform an elementary arithmetic operation modulo $p$ between the first value $c_2$ and the class of the third point to obtain the message $m$; and

- output the message $m$.

7. The device of claim 6, wherein the mapping function $\Psi$ maps points of $E\left(\mathbb{F}_p\right)$ onto points of $E\left(\mathbb{Z}/p^2\mathbb{Z}\right)$ by:

- calculating $\Delta(\boldsymbol{P}) = \dfrac{\left(x^3+ax+b-y^2\right)\bmod p}{p}$, wherein $(x,y)$ are coordinates of a point $\boldsymbol{P}$;

- calculating $\psi(\boldsymbol{P}) = \dfrac{\Delta(\boldsymbol{P})}{2y}\bmod p$; and

- mapping $(x,y) \mapsto (x, y + \psi(\boldsymbol{P})p)$.

8. The device of claim 6, wherein $q$ is prime.

9. A method of encryption of a message $m \in \mathbb{Z}/p\mathbb{Z}$ to obtain a ciphertext, the method comprising the steps in a processor (120) of a device (100), of:

- choosing (S1) an integer $r \in \mathbb{Z}/q\mathbb{Z}$;

- computing (S2) in $E\left(\mathbb{F}_p\right)$ a first point $\boldsymbol{C_1}$ = $[r_1]\boldsymbol{P}$ and a second point $\boldsymbol{C_2}$ = $[r_2]\boldsymbol{Y}$, wherein $r_1$ and $r_2$ are integers derived in a predetermined manner from the integer $r$, $E$ is an elliptic curve defined over $\mathbb{F}_p$, $\boldsymbol{P} \in E\left(\mathbb{F}_p\right)$ is a point of finite order $q$, $\boldsymbol{Y} = [s]\boldsymbol{P} \in E\left(\mathbb{F}_p\right)$ is an encryption key for an integer $s \in \mathbb{Z}/q\mathbb{Z}$;

- computing (S3) the class $\beta$ of $\Psi(\boldsymbol{C_2})$, where $\Psi$ is a mapping function;
- computing (S4) a first value $c_2$ by performing an elementary arithmetic operation modulo $p$ between the message m and the class $\beta$;
- combining the first point $\boldsymbol{C_1}$ and the first value $c_2$ to obtain the ciphertext $(\boldsymbol{C_1}, c_2)$; and
- outputting (S5) the ciphertext $(\boldsymbol{C_1}, c_2)$.

10. The method of claim 9, wherein the mapping function $\Psi$ maps points of $E\left(\mathbb{F}_p\right)$ onto points of $E\left(\mathbb{Z}/p^2\mathbb{Z}\right)$.

11. The method of claim 10, wherein $\Psi(\boldsymbol{C_2})$ is obtained by:

- calculating $\Delta(\boldsymbol{C_2}) = \dfrac{\left(x^3+ax+b-y^2\right)\bmod p}{p}$, wherein $(x,y)$ are coordinates of $\boldsymbol{C_2}$;

- calculating $\psi(\boldsymbol{C_2}) = \dfrac{\Delta(\boldsymbol{C_2})}{2y}\bmod p$; and

- mapping $(x,y) \mapsto (x, y + \psi(\boldsymbol{C_2})_p)$.

12. The method of claim 9, wherein $q$ is prime.

13. The method of claim 9, wherein $r_1 = r_2$.

14. A method of decryption of a ciphertext $(\boldsymbol{C_1}, c_2)$ comprising a first point $\boldsymbol{C_1}$ and a first value $c_2$ to obtain a message $m \in \mathbb{Z}/p\mathbb{Z}$, the method comprising the steps in a processor (220) of a device (200), of:

- multiplying a decryption key s and the first point $\boldsymbol{C_1}$ to obtain a second point $\boldsymbol{P} = (x,y) \in E\left(\mathbb{F}_p\right)$;

- mapping $\boldsymbol{P}$ onto a third point in $E\left(\mathbb{Z}/p^2\mathbb{Z}\right)$ using a mapping function $\Psi$;

- performing (S6) an elementary arithmetic operation modulo $p$ between the first value $c_2$ and the class of third point to obtain the message $m$; and
- outputting the message $m$.

**15.**

The method of claim 14, wherein the mapping function $\Psi$ maps points of $E\left(\mathbb{F}_p\right)$ onto points of $E\left(\mathbb{Z}/p^2\mathbb{Z}\right)$ by:

- calculating $\Delta(\boldsymbol{P}) = \dfrac{\left(x^3+ax+b-y^2\right)\bmod p}{p}$, wherein $(x,y)$ are coordinates of a point $\boldsymbol{P}$;

- calculating $\psi(\boldsymbol{P}) = \dfrac{\Delta(\boldsymbol{P})}{2y} \bmod p$; and

- mapping $(x,y) \mapsto (x, y + \psi(\boldsymbol{P})p)$.

| S1 | Choose a random integer $r \in \mathbb{Z}/q\mathbb{Z}$ |
| --- | --- |

| S2 | Compute $C_1 = [r]P$ and $C_2 = [r]Y$ in $E(\mathbb{F}_p)$ |
| --- | --- |

| S3 | Compute $\beta = [\![\Psi(C_2)]\!]$ |
| --- | --- |

| S4 | Define $c_2 = m + \beta \pmod{p}$ |
| --- | --- |

| S5 | Output the ciphertext $(C_1, c_2)$ |
| --- | --- |

| S6 | Calculate $m = c_2 - [\![\Psi([s]C_1)]\!] \pmod{p}$ using the secret key $s$. |
| --- | --- |

Figure 1

**Encryption device**

140

I/O 110

Mem. 130

CPU 120

100

**Decryption device**

I/O 210

Mem. 230

CPU 220

200

240

Figure 2

Europäisches
Patentamt

European
Patent Office

Office européen
des brevets

# EUROPEAN SEARCH REPORT

Application Number

EP 13 30 5298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BENOÎT CHEVALLIER-MAMES ET AL: "Encoding-Free ElGamal Encryption Without Random Oracles", 24 April 2006 (2006-04-24), PUBLIC KEY CRYPTOGRAPHY - PKC 2006 LECTURE NOTES IN COMPUTER SCIENCE;;LNCS, SPRINGER, BERLIN, DE, PAGE(S) 91 - 104, XP047030202, ISBN: 978-3-540-33851-2 | 1,2,4-6, 8-10, 12-14 | INV. H04L9/30 |
| A | * section 4 * | 3,7,11, 15 | |
| Y | PAILLIER P: "TRAPDOORING DISCRETE LOGARITHMS ON ELLIPTIC CURVES OVER RINGS", ASIACRYPT. INTERNATIONAL CONFERENCE ON THE THEORY AND APPLICATIONOF CRYPTOLOGY AND INFORMATION SECURITY, X, XX, 3 December 2000 (2000-12-03), pages 573-584, XP001029955, | 1,2,4-6, 8-10, 12-14 | |
| A | * sections 1, 3 and 4 * | 3,7,11, 15 | |

TECHNICAL FIELDS SEARCHED (IPC)

H04L

The present search report has been drawn up for all claims

| Place of search | Date of completion of the search | Examiner |
|---|---|---|
| Munich | 9 September 2013 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..........................................................................

& : member of the same patent family, corresponding document

EPO FORM 1503 03.82 (P04C01)

**EP 2 779 525 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAHER EIGAMAL.** A public key cryptosystem and a signature scheme based on discrete logarithms. *IEEE Transactions on Information Theory,* 1985, vol. 31 (4), 469-472
- **STEPHEN C. POHLIG ; MARTIN E. HELLMAN.** An improved algorithm for computing logarithms over GF(p) and its cryptographic significance. *IEEE Transactions on Information Theory,* 1978, vol. 24 (1), 106-110
- **STEVEN GALBRAITH.** Elliptic curve Paillier schemes. *Journal of Cryptology,* 2002, vol. 15 (2), 129-138
- Western European Workshop on Research in Cryptology. Lecture Notes in Informatics. 2005, vol. 74, 32-44
- Elliptic Curves, Number Theory and Cryptography. **LAWRENCE C. WASHINGTON.** Discrete Mathematics and its Applications. Chapman & Hall/CRC, 2008
- Encoding-free EIGamal encryption without random oracles. **BENOIT CHEVALLIER-MAMES ; PASCAL PAILLIER ; DAVID POINTCHEVAL et al.** Public Key Cryptography - PKC 2006, volume 3958 of Lecture Notes in Computer Science. Springer, 2006, vol. 3958, 91-104
- **JOSEPH H. SILVERMAN.** The Theory of Elliptic Curves. Volume 106 of Graduate Texts in Mathematics. Springer-Verlag, 1986, vol. 106